# EUROPÄISCHE PATENTSCHRIFT

(11) **EP 3 520 898 B1**
(45) Veröffentlichungstag und Bekanntmachung des Hinweises auf die Patenterteilung: **09.12.2020**
(21) Anmeldenummer: 18155398.3
(22) Anmeldetag: 06.02.2018
(51) Int. Cl.: B02C 17/16, B02C 17/18

(54) **VORRICHTUNG UND VERFAHREN ZUR HOCHENERGIE- UND/ODER FEINSTMAHLUNG VON PARTIKELN**
DEVICE AND METHOD FOR HIGH-ENERGY GRINDING AND/OR MICROGRINDING OF PARTICLES
DISPOSITIF ET PROCÉDÉ DE BROYAGE ÉNERGIQUE ET/OU DE PULVÉRISATION DE PARTICULES

(43) Veröffentlichungstag der Anmeldung: 07.08.2019
(73) Patentinhaber: Helmholtz-Zentrum Geesthacht Zentrum für Material- und Küstenforschung GmbH, 21502 Geesthacht (DE)
(72) Erfinder: BELLOSTA VON COLBE, José M., 21465 Wentorf bei Hamburg (DE); KLASSEN, Thomas, 21465 Wentorf bei Hamburg (DE); DORNHEIM, Martin, 21391 Reppenstedt (DE); ZOZ, Henning, 57258 Freudenberg (DE); BENZ, Hans Ulrich, 57258 Freudenberg (DE)
(74) Vertreter: Uexküll & Stolberg

(56) Entgegenhaltungen:
- DE-A1- 19 635 500
- JP-A- H0 647 306
- US-A- 3 682 399

## Beschreibung

Die vorliegende Erfindung betrifft eine Vorrichtung und ein Verfahren zur Hochenergie- und/oder Feinstmahlung von Partikeln mit Hilfe von schüttfähigen Mahlkörpern.

### HINTERGRUND DER ERFINDUNG

Derartige Vorrichtungen, insbesondere Kugelmühlen, werden u. a. zur Feinstzerkleinerung oder Homogenisierung von Mahlgut verwendet. Das Mahlgut wird zusammen mit Mahlkörpern in Form von Kugeln in einen Mahlraum eingefüllt und mit Hilfe eines angetriebenen Rotors in Bewegung versetzt. Die sich bewegenden Kugeln kollidieren mit dem Mahlgut, wodurch dieses zerkleinert wird. Kugelmühlen ermöglichen ein Mahlen in einer Gasatmosphäre, wie beispielsweise bei der Herstellung von Metallhydriden, d. h. beim Mahlen von Metalllegierungen in einer Wasserstoffatmosphäre, oder beim Feinstmahlen von Metallhydriden in einer Schutzgasatmosphäre, beispielsweise unter Verwendung von Argon. Als Mahlgut können grundsätzlich jegliche Stoffe verwendet werden, d. h. beispielsweise Steine, Zement, Holz sowie Farbpigmente und Metalllegierungen. Das Mahlgut kann zu Partikeln mit einer Größe von einigen nm bis hin zu einer Größe von mehreren µm zerkleinert werden.

Eine Kugelmühle ist beispielsweise in der DE 196 35 500 A1 offenbart. Die Kugelmühle umfasst einen Mahlbehälter mit einem darin befindlichen Mahlraum, der eine Charge schüttfähiger Mahlkörper aufnehmen kann. In dem Mahlraum ist ein Rotor angeordnet, dessen Welle gegenüber dem feststehenden Mahlkörper antreibbar ist. Der Mahlbehälter weist einen Eintritts- und einen Austrittsstutzen auf, der ein Einfüllen des Mahlguts in den Mahlbehälter und eine Entnahme des Mahlguts nach Beendigung des Mahlvorgangs ermöglicht.

Beim Mahlen von Mahlgut unter einer Schutzgasatmosphäre wird zuerst der Mahlraum mittels Vakuumpumpe geleert, dann das Schutzgas, beispielsweise Argon oder Stickstoff, vor Beginn des Mahlvorgangs in den Mahlraum eingefüllt. Zuletzt wird mittels einer inertisierten Verbindung das zu mahlende Gut in den Mahlraum eingeführt und die Einfüllöffnung danach verschlossen. Aufgrund von Undichtigkeiten in dem Mahlbehälter können Teile des Schutzgases aus dem Mahlraum in die Umgebung entweichen und Verunreinigungen, beispielsweise Sauerstoff als Teil der Umgebungsluft, in den Mahlraum eindringen. Dies kann insbesondere beim Mahlen von Metallhydriden, zur Verunreinigung des Mahlguts führen, da Metallhydride dazu neigen, mit Sauerstoff zu reagieren. Darüber hinaus entstehen durch das unkontrollierte Eindringen von Sauerstoff in den Mahlraum verschiedenen Bereiche, die unterschiedliche Sauerstoffkonzentrationen aufweisen. Entsprechend ist eine zuverlässige Messung der Sauerstoffkonzentration im Mahlraum nicht möglich. US 3682399 offenbart eine Vorrichtung gemäß dem Oberbegriff des Anspruchs 1.

### BESCHREIBUNG DER ERFINDUNG

Der vorliegenden Erfindung liegt die Aufgabe zugrunde, eine Vorrichtung zur Hochenergie- und/oder Feinstmahlung von Partikeln zur Verfügung zu stellen, die eine Verunreinigung der Proben während des Mahlvorgangs verhindert und eine zuverlässige Messung der Sauerstoffkonzentration im Inneren des Mahlraums ermöglicht. Ferner soll ein Verfahren zur Hochenergie- und/oder Feinstmahlung von Partikeln zur Verfügung gestellt werden, bei dem Verunreinigungen des Mahlguts während des Mahlvorgangs verhindert werden.

Die obigen Aufgaben werden durch eine Vorrichtung mit den Merkmalen des Patentanspruchs 1 und durch ein Verfahren mit den Merkmalen des Patentanspruchs 14 gelöst.

Die Vorrichtung umfasst einen ersten Verbindungsanschluss zum Zuführen von Gas in den Mahlraum und einen zweiten Verbindungsanschluss zum Abführen von Gas aus dem Mahlraum. Der zweite Verbindungsanschluss ist erfindungsgemäß an einer zweiten Stirnseite des Mahlbehälters angeordnet und auf einer Rotationsachse des Rotors positioniert. Der zweite Verbindungsanschluss weist einen Filter auf, der ein Austreten von Partikeln aus dem Mahlraum verhindert. Alternativ ist ein Filter in einer mit dem zweiten Verbindungsanschluss verbundenen Leitung angeordnet, der für Partikel, die aus dem Mahlraum austreten, eine Barriere bildet.

Bevorzugt wird während eines Mahlvorgangs Gas, insbesondere Schutzgas, über den ersten Verbindungsanschluss in einem Gaszuführstrom in den Mahlraum und durch den zweiten Verbindungsanschluss Gas in einem Gasabführstrom aus dem Mahlraum gefördert. Optional erfolgt die Förderung von Gas in bzw. aus dem Mahlraum kontinuierlich. Dadurch entsteht ein Schutzgasstrom, insbesondere einen kontinuierlichen Schutzgasstrom, von dem ersten Verbindungsanschluss durch den Mahlraum hindurch zum zweiten Verbindungsanschluss. Durch die kontinuierliche Zu- bzw. Abfuhr des Schutzgases in den bzw. aus dem Mahlraum wird gewährleistet, dass das Mahlgut ständig in einer intakten Schutzgasatmosphäre gemahlen wird. Eventuelle, durch die Undichtigkeiten im Mahlbehälter in den Mahlraum eintretende Verunreinigungen, insbesondere Sauerstoff, werden durch den kontinuierlichen Schutzgasstrom aus dem Mahlraum ausgespült. Darüber hinaus bewirkt ein kontinuierlicher Schutzgasstrom durch den Mahlraum eine kontinuierliche Vermischung und damit annähernde Homogenisierung der im Mahlraum enthaltenen Gase. Dadurch ist gewährleistet, dass die Sauerstoffkonzentration an unterschiedlichen Positionen im Mahlraum annähernd gleich ist.

Im Rahmen der Erfindung wurde erkannt, dass mit Hilfe eines kontinuierlichen Schutzgasstroms eine im Vergleich zu bisherigen Lösungen, bei denen kein kontinuierlicher Schutzgasstrom den Mahlraum durchströmt, eine um Faktor 10 niedrigere Sauerstoffkonzentration im Mahlraum erreicht werden kann. Damit werden Reaktionen des Mahlguts mit Verunreinigungen minimiert bzw. nahezu unterbunden.

Gemäß einer Ausführungsform der Erfindung ist der Filter als Sintermetallfilter ausgebildet. Ein Sintermetallfilter besteht zu großen Teilen aus extrem haltbaren Stahlsorten. Die besonderen Eigenschaften dieses Materials ermöglichen eine robuste Bauart und damit eine lange Lebensdauer. Da der Sintermetallfilter nicht entflammbar ist, wie es bei z. B. Papierfiltern der Fall ist, kann der Sintermetallfilter bei der Reinigung des Mahlraums, d.h. beim Einleiten von Sauerstoff bzw. Luft in den Mahlraum nicht brennen. Eventuell im Bereich des Sintermetallfilters verbleibende Partikel können so entfernt bzw. abgebrannt werden, ohne den Sintermetallfilter zu beschädigen oder ein größeres Feuer zu verursachen.

Gemäß einer weiteren Ausführungsform der Erfindung umfasst der Filter Filtermaterial mit Poren, die eine Porengröße von 0,1 µm bis 1 µm, bevorzugt von 0,3 µm bis 0,7 µm, besonders bevorzugt von etwa 0,5 µm aufweisen. Da der Filter ein Austreten von Partikeln aus dem Mahlraum verhindern soll, muss die Porengröße entsprechend kleiner als die kleinste zu erwartende Partikelgröße gewählt werden. Jedoch muss gewährleistet sein, dass das Gas des Gasabführstroms den Sintermetallfilter ungehindert durchströmen kann.

Ebenfalls bevorzugt ist eine Ausführungsform, bei der zwischen dem zweiten Verbindungsanschluss und dem Filter ein Auffangbehälter zum Auffangen von Partikeln angeordnet ist, die aus dem Mahlraum ausgetreten sind. Ist erfindungsgemäß ein Filter in einer mit dem zweiten Verbindungsanschluss verbundenen Leitung angeordnet, so verhindert ein Auffangbehälter, dass aus dem Mahlraum ausgetretene Partikel in der mit dem zweiten Verbindungsanschluss verbundenen Leitung verbleiben. Die aus dem Mahlraum in die Leitung ausgetretenen Partikel fallen in den Auffangbehälter und können anschließend manuell, beispielsweise unter Verwendung einer Schleuse, in den Mahlraum zurückbefördert werden. Alternativ ist es ebenso möglich, eine Rückführleitung vorzusehen, die ein automatisches Rückführen der in dem Auffangbehälter gesammelten Partikel in den Mahlraum ermöglicht.

In einer weiteren Ausführungsform der Erfindung weist der zweite Verbindungsanschluss eine Gasabführöffnung zum Abführen eines Gasabführstroms aus dem Mahlraum und ein Ableitelement zum Ableiten von in Richtung der Gasabführöffnung strömenden Partikeln auf, wobei das Ableitelement derart positioniert ist, dass es die Gasabführöffnung in einer Richtung entlang der Rotationsachse des Rotors verdeckt. Mit Hilfe des Ableitelements wird verhindert, dass sämtliche, in Richtung der Gasabführöffnung strömenden Partikel den Filter erreichen, und diesen möglicherweise verstopfen. Das Ableitelement ist derart ausgebildet, dass es Partikel, die in Richtung der Gasabführöffnung strömen, derart ableitet bzw. ablenkt, dass sie den Filter nicht erreichen, sondern zurück in den Mahlraum geleitet werden. Das in Richtung der Gasabführöffnung strömende Gas des Gasabführstroms hingegen wird von dem Ableitelement ebenfalls abgelenkt, kann aber aufgrund seines im Vergleich zu den Partikeln geringeren Gewichts in Richtung der Gasabführöffnung strömen und den Mahlbehälter verlassen.

Gemäß einer bevorzugten Ausführungsform ist das Ableitelement rotationssymmetrisch zur Rotationsachse des Rotors ausgebildet, verjüngt sich in Richtung der Gasabführöffnung und ist konzentrisch zur kreisförmigen Gasabführöffnung angeordnet. Bevorzugt weist das Ableitelement einen größten Radius auf, der größer ist als der Radius der kreisförmigen Gasabführöffnung. Somit überragt das Ableitelement die Gasabführöffnung in radialer Richtung quer zur Rotationsachse. Dadurch wird ein direktes Anströmen der Gasabführöffnung mit Hilfe des Ableitelements verhindert.

Gemäß einer weiteren Ausführungsform ist das Ableitelement als Konus mit einer Mantelfläche ausgebildet, die einen Strömungskanal für den Gasabführstrom in der Richtung der Gasabführöffnung einseitig begrenzt. Der Strömungskanal ist derart ausgebildet, dass er mindestens eine Ablenkung des Gasabführstroms in Richtung der Gasabführöffnung erzwingt, so dass Partikel aus dem Gasabführstrom abgeschieden werden. Aufgrund der unterschiedlichen Massen der Partikel und des Gases des Gasabführstroms führt die mindestens eine Ablenkung des Gasabführstroms durch das Ableitelement zu einem Abscheiden der Partikel aus dem Gasabführstrom. Bevorzugt erfährt ein Gasabführstrom, der von dem Mahlraum in Richtung der Gasabführöffnung strömt, eine zweifache Ablenkung durch das Ableitelement. Optional erstreckt sich der Strömungskanal entlang der gesamten Mantelfläche des Ableitelements.

Ebenfalls bevorzugt ist eine Ausführungsform, bei der der Rotor eine Rotorwelle aufweist, die in dem Mahlbehälter einseitig gelagert ist und sich entlang der Rotationsachse erstreckt. Bevorzugt weist der Rotor Agitator-Elemente auf, die an der Rotorwelle befestigt sind und sich in radialer Richtung quer zur Rotationsachse des Rotors erstrecken. Die Agitator-Elemente können beispielsweise mit Prallblechen versehen sein, die während eines Mahlvorgangs mit dem Mahlgut in Berührung kommen, um diese zu beschleunigen.

In einer weiteren Ausführungsform weist die Rotorwelle ein freies Ende auf, das von dem zweiten Verbindungsanschluss beabstandet angeordnet ist, wobei das Ableitelement zwischen dem freien Ende und der Gasabführöffnung des zweiten Verbindungsanschlusses im Verbindungsanschluss positioniert ist. Bevorzugt hat der zweite Verbindungsanschluss eine Aufnahme für das Ableitelement. Bevorzugt wird das in die Aufnahme des zweiten Verbindungsanschlusses eingesetzte Ableitelement von Teilbereichen des Verbindungsanschlusses umfangseitig umgeben. Weiter bevorzugt schließt das Ableitelement bündig mit einer Innenwandung des Mahlraums ab. Somit ist gewährleistet, dass das Ableitelement den im Mahlraum befindlichen Mahlkörpern eine möglichst geringe Angriffsfläche bietet. Dadurch ist eine hohe Lebensdauer des Ableitelements gewährleistet. Beispielsweise wird das Ableitelement mit Hilfe von Stegen, die sich von der Mantelfläche des Ableitelements in Richtung des Verbindungsanschlusses erstrecken, mit diesem verbunden.

Gemäß einer bevorzugten Ausführungsform ist der Mahlraum mit einem Überdruck beaufschlagbar. Bevorzugt herrscht im Mahlraum während des Mahlvorgangs ein Überdruck. Beispielsweise liegt der Druck im Mahlraum 100 mbar bis 200 mbar über dem Umgebungsdruck, d. h. der Druck im Mahlraum beträgt zwischen 1,1 bar und 1,2 bar. Es sind aber auch höhere Drücke, wie beispielsweise 100 bar oder mehr, im Mahlraum denkbar. In diesem Fall müsste der Mahlbehälter 2 entsprechend verstärkt werden, was aber mithilfe von fachüblichen Mitteln ohne weiteres möglich ist. Aufgrund des Überdrucks strömt Gas durch eventuell vorhandene Undichtigkeiten im Mahlbehälter aus dem Mahlraum in die Umgebung. Dadurch wird verhindert, dass Verunreinigungen, insbesondere Sauerstoff, aus der Umgebung des Mahlbehälters in den Mahlraum eindringen und dort mit dem Mahlgut reagieren bzw. dieses verunreinigen.

Gemäß einer weiteren Ausführungsform umfasst die Vorrichtung eine Sicherheitseinrichtung, die ausgebildet ist, zu verhindern, dass ein im Mahlraum herrschender Druck einen vorbestimmten Schwellenwert überschreitet und dadurch den Druck in dem Mahlraum im Wesentlichen konstant hält. Bevorzugt ist die Sicherheitseinrichtung als Überdruckventil ausgebildet. Beispielsweise strömt Schutzgas aus einem Gasspeicher über den ersten Verbindungsanschluss in den Mahlraum. Bevorzugt weist der Gasspeicher einen Druck auf, der höher ist als der Druck in dem Mahlraum. Optional beträgt der Druck im Gasspeicher etwas 200 bar bis 300 bar und der gewünschte Druck im Mahlraum zwischen 1,1 bar und 1,2 bar. Entsprechend strömt das in einem Gaszuführstrom durch den ersten Verbindungsanschluss in den Mahlraum zugeführte Gas mit einem Druck in Richtung Mahlraum, der höher ist als der gewünschte Druck im Inneren des Mahlraums. Dadurch wird verhindert, dass der im Mahlraum herrschende Druck einen vorbestimmten Schwellenwert, der beispielsweise dem gewünschten Druck im Mahlraum entspricht, unterschreitet. Um auch ein Überschreiten des Schwellenwerts zu verhindern, wird das Überdruckventil derart eingestellt, dass es Gas an die Umgebung, beispielsweise über einen Schornstein, abgibt, wenn der im Mahlraum herrschende Druck einen Schwellenwert überschreitet. Optional weist der Gasspeicher einen Druckminderer auf, so dass der Gaszuführstrom nicht mit dem im Inneren des Gasspeichers herrschenden Druck in den Mahlraum strömt, sondern mit einem im Vergleich hierzu geringeren Druck, beispielsweise 5 bar, in den Mahlraum geleitet wird. Der verminderte Druck des Gaszuführstroms ist aber in jedem Fall höher als der im Mahlraum herrschende vorbestimmte Druck.

In einer Ausführungsform weist die Vorrichtung eine Messeinrichtung zur Messung der Sauerstoffkonzentration in dem aus dem Mahlraum abgeführten Gas auf, wobei die Messeinrichtung mit dem zweiten Verbindungsanschluss verbunden ist. Die Messeinrichtung ist derart ausgebildet, dass sie Gaskonzentrationen, insbesondere die Sauerstoffkonzentration, im Gasabführstrom und damit insbesondere die Sauerstoffkonzentration im Mahlraum messen kann. In Abhängigkeit von der gemessenen Sauerstoffkonzentration kann bestimmt werden, welche Menge von unverbrauchtem Schutzgas, beispielsweise Argon oder Wasserstoff, über welchen Zeitraum über den ersten Verbindungsanschluss in den Mahlraum zugeführt werden muss, um die Schutzgasatmosphäre im Inneren des Mahlraums zu etablieren oder aufrechtzuerhalten. Die Gaskonzentrationsmessung kann mithilfe unterschiedlicher Messprinzipien wie beispielsweise mithilfe von physikalischen, chemischen, resistiven, kapazitiven, potentiometrischen, amperometrischen, thermischen, thermochemischen, thermisch-physikalischen, gravimetrischen, optischen oder biochemischen Messsprinzipien erfolgen. Messeinrichtungen zur Bestimmung einer Gaskonzentration sind bekannt und werden beispielsweise von der Firma UNITRONIC GmbH Mündelheimer Weg, 940472 Düsseldorf vertrieben.

Gemäß einer weiteren Ausführungsform ist der erste Verbindungsanschluss an der ersten Stirnseite des Mahlbehälters angeordnet. Dadurch ist gewährleistet, dass der über den ersten Verbindungsanschluss in den Mahlraum zugeführte Gaszuführstrom als Schutzgasstrom den gesamten Mahlraum durchströmen muss, bevor er über den zweiten Verbindungsanschluss in einem Gasabführstrom den Mahlraum verlässt. Entsprechend bewirkt eine derartige Anordnung der ersten und zweiten Verbindungsanschlüsse eine vollständige Durchströmung des Mahlraums.

Die vorliegende Erfindung betrifft auch ein Verfahren zur Hochenergie- und/oder Feinstmahlung von Partikeln mit den Merkmalen des Patentanspruchs 14. Dadurch wird eine Verunreinigung des im Mahlraum befindlichen Mahlguts verhindert und eine zuverlässige Messung der Sauerstoffkonzentration im Inneren des Mahlraums gewährleistet.

Gemäß einer Ausführungsform der vorliegenden Erfindung erfolgt die Steuerung der kontinuierlichen Zufuhr von Gas in den Mahlraum während Schritt (c) mit Hilfe einer Sicherheitseinrichtung, die verhindert, dass ein im Mahlraum herrschender Druck einen vorbestimmten Schwellenwert überschreitet. Bevorzugt strömt das in einem Gaszuführstrom durch den ersten Verbindungsanschluss in den Mahlraum zuzuführende Gas mit einem höheren Druck als der im Mahlraum gewünschte Druck durch den ersten Verbindungsanschluss. Damit der im Mahlraum herrschende Druck einen vorbestimmten Schwellenwert nicht überschreitet, wird die Sicherheitseinrichtung, bevorzugt ein Überdruckventil, derart eingestellt, dass es Teile des Gaszuführstroms bei Überschreiten des Schwellenwerts in die Umgebung, beispielsweise durch einen Schornstein, abführt und so den in Mahlraum herrschenden Druck im Wesentlichen konstant hält.

### DETAILLIERTE BESCHREIBUNG DER ERFINDUNG

Im Folgenden wird die vorliegende Erfindung mit Bezug auf mehrere Figuren im Detail beschrieben. Die Figuren zeigen lediglich eine bevorzugte Ausführungsform und beschränken die Erfindung in keiner Weise. Es zeigen
- Fig. 1: eine schematische Darstellung der erfindungsgemäßen Vorrichtung und
- Fig. 2: eine schematische Darstellung des zweiten Verbindungsanschlusses gemäß Figur 1 im Detail (Detail A in Figur. 1).

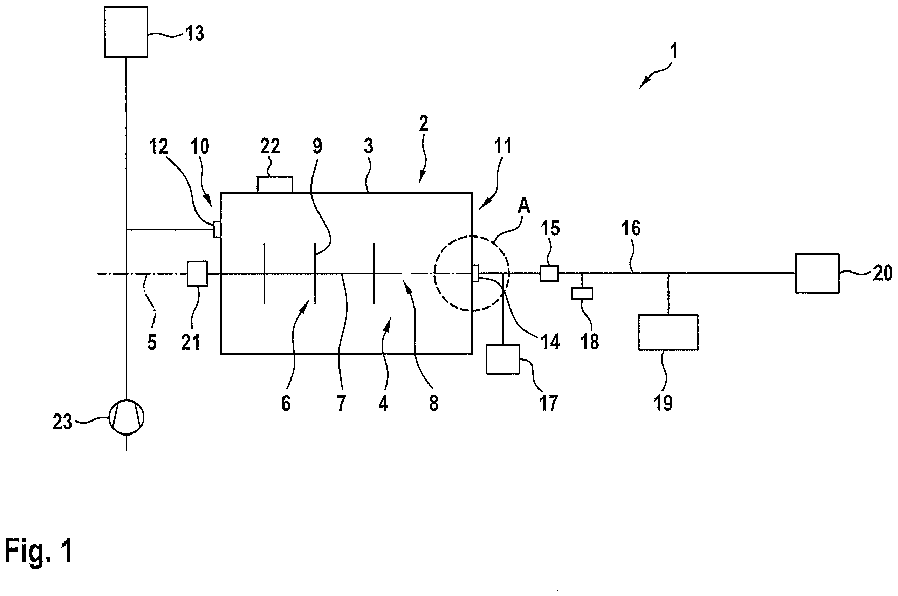

In Fig. 1 ist eine als Kugelmühle 1 ausgebildete Vorrichtung zur Hochenergie- und/oder Feinstmahlung von Partikeln mit Hilfe von schüttfähigen Mahlkörpern in einer abgeschlossenen Gasatmosphäre dargestellt. Die Kugelmühle 1 umfasst einen Mahlbehälter 2 zur Aufnahme der Partikel und der Mahlkörper mit einem geschlossenen Gehäuse 3 und einem darin befindlichen Mahlraum 4. Der Mahlraum 4 ist mit einem Überdruck beaufschlagbar. Bevorzugt herrscht in dem Mahlraum 4 während eines Mahlvorgangs ein Druck zwischen 1,1 bar und 1,2 bar.

Die Kugelmühle 1 umfasst weiter einen in dem Mahlbehälter 2 um eine horizontale Rotationsachse 5 drehbar gelagerten Rotor 6 zur Beschleunigung der Mahlkörper während eines Mahlvorgangs. Der Rotor 6 wird über einen Motor 21 angetrieben und weist eine Rotorwelle 7 auf, die in dem Mahlbehälter 2 einseitig gelagert ist und sich entlang der Rotationsachse 5 erstreckt. Die Rotorwelle 7 hat ein freies Ende 8. An der Rotorwelle 7 sind Agitator-Elemente 9 angeordnet, die auf die im Mahlraum befindlichen Mahlkörper einwirken.

Der Mahlbehälter 2 ist zylindrisch ausgebildet und erstreckt sich entlang der Rotationsachse 5 des Rotors 6. Der Mahlbehälter 2 umfasst eine erste Stirnseite 10 und eine zweite Stirnseite 11, die einander gegenüberliegend angeordnet sind und sich jeweils quer zur Rotationsachse 5 des Rotors 6 erstrecken.

Der Mahlbehälter 2 umfasst weiter einen ersten Verbindungsanschluss 12 zum Zuführen von Gas aus einem Gasspeicher 13 in den Mahlraum 4 in einem Gaszuführstrom und einen zweiten Verbindungsanschluss 14 zum Abführen von Gas aus dem Mahlraum 4 in einem Gasabführstrom. Der erste Verbindungsanschluss 12 ist an der ersten Stirnseite 10 des Mahlbehälters 2 angeordnet. Der zweite Verbindungsanschluss 14 ist an der zweiten Stirnseite 11 des Mahlbehälters 2 angeordnet und auf der Rotationsachse 5 positioniert.

Der Mahlbehälter 2 weist eine Öffnung 22 auf, über die der Mahlraum 4 mit Mahlgut befüllt wird. Darüber hinaus können weitere Öffnungen oder Verbindungsanschlüsse (nicht dargestellt) an dem Mahlbehälter 2 vorgesehen sein.

An dem zweiten Verbindungsanschluss 14 ist eine Leitung 16 angeschlossen. In der Leitung 16 ist ein als Sintermetallfilter 15 ausgebildeter Filter angeordnet. Der Sintermetallfilter 15 bildet eine Barriere für Partikel, die aus dem Mahlraum 4 austreten ist aber von dem partikelfreien Gasabführstrom durchströmbar. Alternativ kann der Sintermetallfilter 15 auch in dem zweiten Verbindungsanschluss 14 angeordnet sein.

Der Sintermetallfilter 15 umfasst Filtermaterial mit Poren (nicht dargestellt), die eine Porengröße von 0,1 µm bis 1 µm, bevorzugt von 0,3 µm bis 0,7 µm, besonders bevorzugt von etwa 0,5 µm, aufweisen.

Zwischen dem zweiten Verbindungsanschluss 14 und dem Sintermetallfilter 15 ist ein Auffangbehälter 17 angeordnet. Der Auffangbehälter 17 ist ausgebildet, Partikel aufzufangen, die aus dem Mahlraum 4 ausgetreten sind und von dem Sintermetallfilter 15 an einem Weiterströmen in der Leitung 16 gehindert werden. Ist der Sintermetallfilter 15 alternativ im zweiten Verbindungsanschluss 14 vorgesehen, so kann auf den Auffangbehälter 17 verzichtet werden.

Die Kugelmühle 1 umfasst weiter eine als Überdruckventil 18 ausgebildete Sicherheitseinrichtung. Das Überdruckventil 18 ist ausgebildet, zu verhindern, dass ein im Mahlraum 4 herrschender Druck einen vorbestimmten Schwellenwert überschreitet, und hält dadurch den Druck in dem Mahlraum 4 im Wesentlichen konstant. Bevorzugt ist das Überdruckventil 8 derart eingestellt, dass der Schwellenwert zwischen 1,1 bar und 1,2 bar und damit dem gewünschten Druck im Mahlraum 4 entspricht. Wird der Schwellenwert überschritten, so führt das Überdruckventil 18 überschüssiges Gas an die Umgebung der Kugelmühle 1 ab. Das Überdruckventil ist entlang der Leitung 16 positioniert, die mit dem zweiten Verbindungsanschluss 14 verbunden ist. Alternativ ist es ebenso möglich, das Überdruckventil 18 über eine weitere Leitung mit einem weiteren Verbindungsanschluss (nicht dargestellt) mit dem Mahlraum 4 zu verbinden. Bevorzugt ist der weitere Verbindungsanschluss an einer der Stirnseiten 10,11 des Mahlbehälters 2 angeordnet.

Die Kugelmühle 1 umfasst weiter eine Messeinrichtung 19 zur Messung der Sauerstoffkonzentration in dem aus dem Mahlraum 4 abgeführten Gasabführstrom. Die Messeinrichtung 19 ist entlang der Leitung 16 angeordnet und über diese mit dem zweiten Verbindungsanschluss 14 und damit mit dem Mahlraum 4 verbunden. Das aus dem Mahlraum 4 in einem Gasabführstrom ausgeströmte Gas wird von der Messeinrichtung 19 gemessen und über einen Schornstein 20 an die Umgebung der Kugelmühle 1 abgegeben. Somit kann basierend auf der durchgeführten Messung auf die im Mahlraum 4 vorherrschende Sauerstoffkonzentration geschlossen werden. Messeinrichtungen 19 zum Messen von Gaskonzentrationen, insbesondere von Sauerstoffkonzentrationen, sind bekannt, weshalb auf eine weitere Erläuterung der Messeinrichtung 19 und deren Messprinzip vorliegend verzichtet wird.

Die Kugelmühle 1 weist weiter einen Kompressor 23 auf, mittels dem der Mahlraum 4 mit Luft aus der Umgebung der Kugelmühle 1 geflutet werden kann. Dabei kann der Kompressor 23 als alleiniges Fördermittel zum Fördern von Umgebungsluft in den Mahlraum 4 verwendet werden. Zusätzlich kann gleichzeitig Gas aus dem Gasspeicher 13 in den Mahlraum 4 eingeleitet werden, so dass sich die Umgebungsluft und das Gas vermischen und gleichzeitig in den Mahlraum 4 einströmen. Die Kugelmühle 1 kann mehrere Ventile aufweisen, die beispielsweise eine genaue Steuerung der Anteile von Umgebungsluft und Gas aus dem Gasspeicher 13, die in den Mahlraum 4 strömen, ermöglicht.

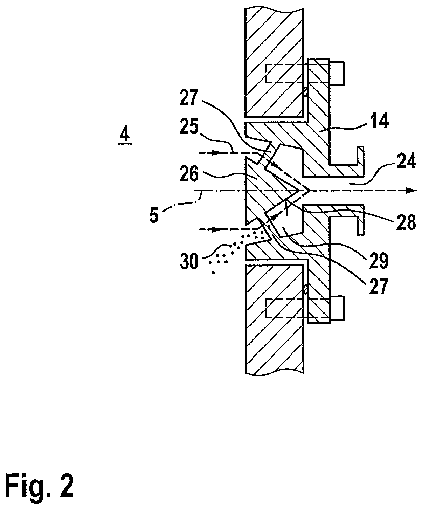

Fig. 2 zeigt eine Detailansicht des bereits in Bezug auf Fig. 1 beschriebenen zweiten Verbindungsanschlusses 14 (Detail A in Fig. 1). Wie in Fig. 2 zu erkennen ist, weist der zweite Verbindungsanschluss 14 eine Gasabführöffnung 24 zum Abführen des Gasabführstroms aus dem Mahlraum 4 auf. Zur Kenntlichmachung ist der Gasabführstrom in Fig. 2 mit Hilfe einer gestrichelten, mit Pfeilen versehenen Linie 25 gekennzeichnet.

Der zweite Verbindungsanschluss 14 weist weiter ein als Konus 26 ausgebildetes Ableitelement auf, das ausgebildet ist, in Richtung der Gasabführöffnung 24 strömende Partikel abzuleiten. Der Konus 26 ist rotationssymmetrisch zur Rotationsachse 5 des Rotors 6 ausgebildet, verjüngt sich in Richtung der Gasabführöffnung 24 und ist konzentrisch zur kreisförmigen Gasabführöffnung 24 angeordnet. Der Konus 26 ist mit Hilfe von Stegen 27 mit dem zweiten Verbindungsanschluss 14 verbunden. Er ist derart positioniert, dass er die Gasabführöffnung 24 in eine Richtung entlang der Rotationsachse 5 des Rotors 6 verdeckt.

Der Konus 26 weist eine Mantelfläche 28 auf, die einen Strömungskanal 29 für den Gasabführstrom in Richtung der Gasabführöffnung 24 einseitig begrenzt. Der Strömungskanal 29 ist derart ausgebildet, dass er zwei Ablenkungen des Gasabführstroms in Richtung der Gasabführöffnung 24 erzwingt, so dass Partikel aus dem Gasabführstrom abgeschieden werden. Der Konus 26 erzwingt eine erste Ableitung des Gasabführstroms im Bereich seines größten Durchmessers, wenn das aus dem Mahlraum 4 ausströmende Gas in einem Gasabführstrom den Strömungskanal 29 zwischen dem zweiten Verbindungsanschluss 14 und dem Konus 26 eintritt. Die zweite Ablenkung des Gasabführstroms wird im Bereich des kleinsten Durchmessers des Konus 26 im unmittelbaren Übergang zur Abfuhröffnung 24 von dem Konus 26 erzwungen. Zur besseren Kenntlichmachung sind die aus dem Gasabführstrom abgeschiedenen Partikel in Fig. 2 mit Hilfe von Punkten 30 dargestellt.

Im Folgenden soll die Funktion der Kugelmühle 1 anhand eines Verfahrens zur Hochenergie- und/oder Feinstmahlung von Partikeln mit Hilfe von schüttfähigen Mahlkörpern unter Bezugnahme auf die Figuren 1 und 2 beschrieben werden.

In einem ersten Schritt werden schüttfähige Mahlkörper durch die verschließbare Öffnung 22 im Mahlbehälter 2 in den Mahlraum 4 eingebracht.

Daraufhin wird in Schritt (a) der Mahlraum 4 inertisiert, indem gleichzeitig Gas in einem Gaszuführstrom in den bzw. in einem Gasabführstrom aus dem Mahlraum 4 zu- bzw. abgeführt, so dass der Mahlraum 4 mit Überdruck beaufschlagt wird und eine abgeschlossenen Gasatmosphäre in dem Mahlraum 4 entsteht. Der Gaszuführstrom strömt aus dem Gasspeicher 13 über den ersten Verbindungsanschluss 12 in den Mahlraum 4 ein. Dadurch entsteht ein Schutzgasstrom, der den Mahlraum 4 von dem ersten Verbindungsanschluss 12 in Richtung des zweiten Verbindungsanschlusses 14 durchströmt. Das aus dem zweiten Verbindungsanschluss 14 austretende Gas wird dann als Gasabführstrom aus dem Mahlraum 4 hinaus und über die Leitung 16 und den Schornstein 20 in die Umgebung der Kugelmühle 1 abgeführt. Durch die gleichzeitige Zu- und Abfuhr von Gas in den bzw. aus dem Mahlraum 4 wird vor einem Mahlvorgang der Mahlraum 4 vollständig mit dem in dem Gasspeicher 13 befindlichen Schutzgas, beispielsweise Stickstoff oder Argon, geflutet. Eventuell in dem Mahlraum 4 vorhandene Luft wird über den zweiten Verbindungsanschluss 14 an die Umgebung der Kugelmühle 1 abgegeben. Im Rahmen der Erfindung hat es sich als besonders vorteilhaft erwiesen, wenn der Rotor 6 während der Inertisierung des Mahlraums 4 langsam gedreht wird, damit alle Zwischenräume zwischen den Mahlkörpern mit inertisierendem Gas durchströmt werden.

In Schritt (b) wird dann das Mahlgut in Form von Partikeln durch die verschließbare Öffnung 22 im Mahlbehälter 2 in den Mahlraum 4 eingebracht. Dies erfolgt bevorzugt mittels einer inertisierten Leitung, sodass zusammen mit dem Mahlgut keine Umgebungsluft, insbesondere Sauerstoff, in den bereits inertisierten Mahlraum 4 eintritt. Optional wird für das Einbringen des Mahlguts in den Mahlraum 4 eine Schleuse verwendet.

In einem weiteren Verfahrensschritt (c) wird der Rotor 6 mittels des Motors 21 zum Beschleunigen der Mahlkörper in dem Mahlraum 4 und zum Mahlen der Partikel angetrieben. Während Schritt (c) erfolgt die kontinuierliche Zufuhr von Gas in den Mahlraum 4 in Abhängigkeit des aus dem Mahlraum 4 abgeführten Gases derart, dass der Druck in dem Mahlraum 4 im Wesentlichen konstant bleibt.

Während der Schritte (b) und (c) wird mit Hilfe der Messeinrichtung 19 kontinuierlich die Zusammensetzung des Gasabführstroms, insbesondere der Sauerstoffgehalt, in der Leitung 16 gemessen. So wird sichergestellt, dass der Mahlraum 4 vollständig mit dem im Gasspeicher 13 befindlichen Schutzgas geflutet wird bzw. ausreichend Gas aus dem Gasspeicher 13 in den Mahlraum 4 einströmt, so dass die Schutzgasatmosphäre im Mahlraum 4 aufrechterhalten wird.

Wird der Mahlraum 4 anstelle von Schutzgas mit Reaktionsgas, insbesondere Wasserstoff geflutet, um beispielsweise Metallhydride herzustellen, kann mithilfe der Messeinrichtung 19 sichergestellt werden, dass genug Reaktionsgas das Mahlgut erreicht, um es komplett umzusetzen. Wenn nur das freie Volumen des Mahlraums 4 als Gasspeicher für die Reaktion zur Verfügung steht, also die Zwischenräume zwischen dem Mahlgut nicht geflutet wurden, kann nur ein Bruchteil des Mahlguts mangels Reaktionspartner mit dem Reaktionsgas reagieren.

Die Zu- bzw. Abfuhr von Gas in bzw. aus dem Mahlraum 4 wird mit Ventilen (nicht dargestellt) derart gesteuert, dass sich ein Überdruck an Schutzgas bzw. Reaktionsgas in dem Mahlraum 4 einstellt. Hierzu strömt das in dem Gasspeicher 13 befindliche Gas mit einem höheren Druck, beispielsweise 5 bar oder niedriger, als der in dem Mahlraum 4 gewünschte Druck in diesen ein. Dadurch wird gewährleistet, dass der in dem Mahlraum 4 herrschende Druck einen bestimmten Schwellenwert, der beispielsweise dem im Mahlraum 4 gewünschten Druck von 1,1 und 1,2 bar entspricht, unterschreitet. Um ein Überschreiten des vorbestimmten Schwellenwertes zu verhindern, ist das Überdruckventil 18 entlang der Leitung 16 angeordnet, die über den zweiten Verbindungsanschluss 14 mit dem Mahlraum 4 verbunden ist. Das Überdruckventil 18 ist derart eingestellt, dass aus dem zweiten Verbindungsanschluss 14 und damit durch die Leitung 16 strömendes Gas an die Umgebung abgegeben wird, wenn der Druck im Mahlraum 4 den vorbestimmten Schwellenwert überschreitet. Dadurch wird gewährleistet, dass der Druck im Mahlraum 4 im Wesentlichen konstant bleibt.

Um ein möglichst konstantes Verhältnis von Mahlkörpern und Mahlgut im Mahlraum 4 zu gewährleisten, wird der Gasabführstrom im zweiten Verbindungsanschluss 14 an dem Konus 26 vorbei geleitet, so dass die im Gasabführstrom befindlichen Partikel durch mehrmalige Umlenkung desselben aus dem Gasabführstrom abgeschieden und zurück in den Mahlraum 4 geleitet werden. Der Gasabführstrom verlässt den Mahlraum 4 über den zweiten Verbindungsanschluss 14 und durchströmt den Sintermetallfilter 15. Eventuelle, im Gasabführstrom noch enthaltene Partikel werden durch den Sintermetallfilter 15 vom Gas getrennt und im Auffangbehälter 17 gesammelt. Der partikelfreie Gasabführstrom strömt dann über die Leitung 16 und den Schornstein 20 in die Umgebung der Kugelmühle 1.

Alternativ kann der Auffangbehälter 17 als Feststoffabscheider (nicht dargestellt) ausgebildet sein. Der Feststoffabscheider umfasst ein zumindest teilweise mit Flüssigkeit, insbesondere Öl, gefülltes Gefäß, wobei der Gasabführstrom durch die Flüssigkeit geführt wird, dabei die im Gasabführstrom vorhandenen Partikel abgeschieden werden, und der partikelfreie Gasabführstrom den Feststoffabscheider an einem oberen Ende verlässt.

Ist der Mahlvorgang beendet und die gewünschte Partikelgröße der im Mahlraum 4 befindlichen Partikel erreicht, so wird das gemahlene Mahlgut aus dem Mahlraum 4 entnommen. Daraufhin wird der Gaszuführstrom mit Hilfe des Kompressors 23 mit Umgebungsluft angereichert und der Schutzgasanteil im Gaszuführstrom verringert. Dadurch erfolgt nach und nach eine Durchflutung des Mahlraums 4 mit Umgebungsluft. Dabei ist zu beachten, dass der Sauerstoffanteil in dem Mahlraum 4 nur langsam steigt, um eine abrupte Reaktion des in dem Mahlraum 4 befindlichen Mahlguts mit dem Sauerstoff zu verhindern. Ist der Mahlraum 4 während des Mahlvorgangs mit einem Reaktionsgas, wie beispielsweise Wasserstoff gefüllt, wird nach Beendigung des Mahlvorgangs zuerst Argon oder Stickstoff in den Mahlraum 4 eingeleitet, und anschließend der Anteil an Sauerstoff in der Gasphase erhöht. Ist der Mahlraum 4 vollständig mit Umgebungsluft geflutet, können die im Mahlraum 4 enthaltenen Partikel und Partikelreste über die Öffnung 22 im Mahlbehälter 2 entnommen sowie weitere Reinigungsmaßnahmen unternommen werden. Alternativ ist es ebenso denkbar, eine weitere Öffnung am Mahlbehälter 2 vorzusehen, die zur Entnahme der gemahlenen Partikel und Partikelreste sowie zur Reinigung des Mahlraums 4 verwendet wird.

### Bezugszeichenliste

- 1: Kugelmühle
- 2: Mahlbehälter
- 3: Gehäuse
- 4: Mahlraum
- 5: Rotationsachse (Rotor)
- 6: Rotor
- 7: Rotorwelle
- 8: Freies Ende (Rotorwelle)
- 9: Agitator-Element
- 10: Erste Stirnseite (Mahlbehälter)
- 11: Zweite Stirnseite (Mahlbehälter)
- 12: Erster Verbindungsanschluss
- 13: Gasspeicher
- 14: Zweiter Verbindungsanschluss
- 15: Sintermetallfilter
- 16: Leitung
- 17: Auffangbehälter
- 18: Überdruckventil
- 19: Messeinrichtung
- 20: Schornstein
- 21: Motor
- 22: Öffnung (Mahlbehälter)
- 23: Kompressor
- 24: Gasabführöffnung
- 25: Gasabführstrom (Linie)
- 26: Konus (Ableitelement)
- 27: Steg
- 28: Mantelfläche
- 29: Strömungskanal
- 30: Punkt (Partikel)

## Patentansprüche

1. Vorrichtung zur Hochenergie- und/oder Feinstmahlung von Partikeln mit Hilfe von schüttfähigen Mahlkörpern in einer abgeschlossenen Gasatmosphäre umfassend,
einen Mahlbehälter (2) zur Aufnahme der Partikel und der Mahlkörper mit einem geschlossenen Gehäuse (3) und einem darin befindlichen Mahlraum (4) und
einen in dem Mahlbehälter (2) um eine horizontale Rotationsachse (5) drehbar gelagerten Rotor (6) zur Beschleunigung der Mahlkörper während eines Mahlvorgangs,
wobei der Mahlbehälter (2) zylindrisch ausgebildet ist, sich entlang der Rotationsachse (5) erstreckt und weiter umfasst:
eine erste Stirnseite (10) und eine zweite Stirnseite (11), die einander gegenüberliegend angeordnet sind und sich jeweils quer zur Rotationsachse (5) des Rotors (6) erstrecken,
einen ersten Verbindungsanschluss (12) zum Zuführen von Gas in den Mahlraum (4) und
einen zweiten Verbindungsanschluss (14) zum Abführen von Gas aus dem Mahlraum (4),
wobei der zweite Verbindungsanschluss (14) einen Filter (15) aufweist, der ein Austreten von Partikeln aus dem Mahlraum (4) verhindert oder,
wobei ein Filter (15) in einer mit dem zweiten Verbindungsanschluss (14) verbundenen Leitung (16) angeordnet ist und eine Barriere für Partikel bildet, die aus dem Mahlraum (4) austreten, **dadurch gekennzeichnet, dass** der zweite Verbindungsanschluss (14) an der zweiten Stirnseite (11) angeordnet und auf der Rotationsachse (5) positioniert ist.

2. Vorrichtung nach Anspruch 1, **dadurch gekennzeichnet, dass** der Filter als Sintermetallfilter (15) ausgebildet ist.

3. Vorrichtung nach einem der vorhergehenden Ansprüche, **dadurch gekennzeichnet, dass** der Filter (15) Filtermaterial mit Poren umfasst, die eine Porengröße von 0,1 µm bis 1 µm, bevorzugt von 0,3 µm bis 0,7 µm, besonders bevorzugt von etwa 0,5 µm, aufweisen.

4. Vorrichtung nach einem der vorhergehenden Ansprüche, **dadurch gekennzeichnet, dass** zwischen dem zweiten Verbindungsanschluss (14) und dem Filter (15) ein Auffangbehälter (17) zum Auffangen von Partikeln angeordnet ist, die aus dem Mahlraum (4) ausgetreten sind.

5. Vorrichtung nach einem der vorhergehenden Ansprüche, **dadurch gekennzeichnet, dass** der zweite Verbindungsanschluss (14) eine Gasabführöffnung (24) zum Abführen eines Gasabführstroms aus dem Mahlraum (4) und ein Ableitelement (26) zum Ableiten von in Richtung der Gasabführöffnung (24) strömenden Partikeln aufweist, wobei das Ableitelement (26) derart positioniert ist, dass es die Gasabführöffnung (24) in eine Richtung entlang der Rotationsachse (5) des Rotors (6) verdeckt.

6. Vorrichtung nach Anspruch 5, **dadurch gekennzeichnet, dass** das Ableitelement (26) rotationssymmetrisch zur Rotationsachse (5) des Rotors (6) ausgebildet ist, sich in Richtung der Gasabführöffnung (24) verjüngt und konzentrisch zur kreisförmigen Gasabführöffnung (24) angeordnet ist.

7. Vorrichtung nach Anspruch 5, **dadurch gekennzeichnet, dass** das Ableitelement als Konus (26) mit einer Mantelfläche (28) ausgebildet ist, die einen Strömungskanal (29) für den Gasabführstrom in Richtung der Gasabführöffnung (24) einseitig begrenzt, wobei der Strömungskanal (29) derart ausgebildet ist, dass er mindestens eine Ablenkung des Gasabführstroms in Richtung der Gasabführöffnung (24) erzwingt, so dass Partikel aus dem Gasabführstrom abgeschieden werden.

8. Vorrichtung nach einem der vorhergehenden Ansprüche, **dadurch gekennzeichnet, dass** der Rotor (6) eine Rotorwelle (7) aufweist, die in dem Mahlbehälter (2) einseitig gelagert ist und sich entlang der Rotationsachse (5) erstreckt.

9. Vorrichtung nach den Ansprüchen 5 und 8, **dadurch gekennzeichnet, dass** die Rotorwelle (7) ein freies Ende (8) aufweist, das von dem zweiten Verbindungsanschluss (14) beabstandet angeordnet ist, wobei das Ableitelement (26) zwischen dem freien Ende (8) und der Gasabführöffnung (24) des zweiten Verbindungsanschlusses (14) im zweiten Verbindungsanschluss (14) positioniert ist.

10. Vorrichtung nach einem der vorhergehenden Ansprüche, **dadurch gekennzeichnet, dass** der Mahlraum (4) mit einem Überdruck beaufschlagbar ist.

11. Vorrichtung nach einem der vorhergehenden Ansprüche, **dadurch gekennzeichnet, dass** die Vorrichtung eine Sicherheitseinrichtung (18) umfasst, die ausgebildet ist, zu verhindern, dass ein im Mahlraum (4) herrschender Druck einen vorbestimmten Schwellenwert überschreitet, und dadurch den Druck in dem Mahlraum (4) im Wesentlichen konstant hält.

12. Vorrichtung nach einem der vorhergehenden Ansprüche, **dadurch gekennzeichnet, dass** die Vorrichtung eine Messeinrichtung (19) zur Messung der Sauerstoffkonzentration in dem aus dem Mahlraum (4) abgeführten Gas aufweist, wobei die Messeinrichtung (19) mit dem zweiten Verbindungsanschluss (14) verbunden ist.

13. Vorrichtung nach einem der vorhergehenden Ansprüche, **dadurch gekennzeichnet, dass** der erste Verbindungsanschluss (12) an der ersten Stirnseite (10) des Mahlbehälters (2) angeordnet ist.

14. Verfahren zur Hochenergie- und/oder Feinstmahlung von Partikeln mithilfe von schüttfähigen Mahlkörpern in einer Vorrichtung nach einem der Ansprüche 1 bis 13, umfassend die folgenden Schritte:
(a) gleichzeitiges Zu- und Abführen von Gas in den bzw. aus dem Mahlraum (4), so dass der Mahlraum (4) mit Überdruck beaufschlagt wird und eine abgeschlossene Gasatmosphäre in dem Mahlraum (4) entsteht;
(b) Einbringen von Mahlgut in Form von Partikeln in den Mahlraum (4);
(c) Antreiben des Rotors (6) zum Beschleunigen der Mahlkörper in dem Mahlraum (4) und zum Mahlen der Partikel;
wobei während Schritt (c) die kontinuierliche Zufuhr von Gas in den Mahlraum (4) in Abhängigkeit des aus dem Mahlraum (4) abgeführten Gases derart gesteuert wird, dass der Druck in dem Mahlraum (4) im Wesentlichen konstant bleibt.

15. Verfahren gemäß Patentanspruch 14, **dadurch gekennzeichnet, dass** die Steuerung der kontinuierlichen Zufuhr von Gas in den Mahlraum (4) während Schritt (c) mithilfe einer Sicherheitseinrichtung (18) erfolgt, die verhindert, dass ein im Mahlraum (4) herrschender Druck einen vorbestimmten Schwellenwert überschreitet.

## Claims

1. Device for high-energy and/or microgrinding of particles by means of free-flowing grinding media in a closed gas atmosphere, comprising,
a grinding container (2) for holding the particles and the grinding media with a closed housing (3) and a grinding chamber (4) inside it, and
a rotor (6) rotatably mounted around a horizontal rotational axis (5) in the grinding container (2) for accelerating the grinding media during a grinding process, wherein the grinding container (2) is cylindrical, extends along the rotational axis (5) and furthermore comprises:
a first end face (10) and a second end face (11), which are arranged opposite each other and each extend transversely to the rotational axis (5) of the rotor (6),
a first connection port (12) for feeding gas into the grinding chamber (4) and
a second connection port (14) for discharging gas from the grinding chamber (4),
wherein the second connection port (14) has a filter (15) which prevents the leakage of particles from the grinding chamber (4) or,
wherein a filter (15) is arranged in a line (16) connected to the second connection port (14) and forms a barrier for particles flowing out of the grinding chamber (4), **characterized in that** the second connection port (14) is arranged on the second end face (11) and is positioned on the rotational axis (5) .

2. Device according to claim 1, **characterized in that** the filter is designed as a sintered metal filter (15).

3. Device according to any one of the preceding claims, **characterized in that** the filter (15) comprises filter material with pores having a pore size of 0.1 µm to 1 µm, preferably from 0.3 µm to 0.7 µm, in particular preferred, about 0.5 µm.

4. Device according to any one of the preceding claims, **characterized in that**, between the second connection port (14) and the filter (15), a collection container (17) is arranged for collecting particles that have flowed out of the grinding chamber (4).

5. Device according to any one of the preceding claims, **characterized in that** the second connection port (14) comprises a gas discharge opening (24) for draining a gas discharge stream from the grinding chamber (4), and a diverting element (26) for diverting particles flowing in the direction of the gas discharge opening (24), wherein the diverting element (26) is positioned in such a way that it covers the gas discharge opening (24) in one direction along the rotational axis (5) of the rotor (6).

6. Device according to claim 5, **characterized in that** the diverting element (26) is rotationally symmetrical to the rotational axis (5) of the rotor (6), is tapered in the direction of the gas discharge opening (24) and is arranged concentrically to the circular gas discharge opening (24).

7. Device according to claim 5, **characterized in that** the diverting element is designed as a cone (26) with a shell surface (28) which limits a flow channel (29) for the gas discharge stream in the direction of the gas discharge opening (24) on one side, wherein the flow channel (29) is designed in such a way that it forces at least one deflection of the gas discharge stream to take place in the direction of the gas discharge opening (24) so that particles are separated from the gas discharge stream.

8. Device according to any one of the preceding claims, **characterized in that** the rotor (6) comprises a rotor shaft (7), which is mounted in the grinding container (2) on one side and extends along the rotational axis (5).

9. Device according to claims 5 and 8, **characterized in that** the rotor shaft (7) comprises a free end (8), which is arranged spaced away from the second connection port (14), wherein the diverting element (26) is positioned in the second connection port (14) between the free end (8) and the gas discharge opening (24) of the second connection port (14).

10. Device according to any one of the preceding claims, **characterized in that** an overpressure can be applied to the grinding chamber (4).

11. Device according to any one of the preceding claims, **characterized in that** the device comprises a safety device (18) which is designed to prevent a pressure prevailing in the grinding chamber (4) from exceeding a specified threshold value, thereby keeping the pressure in the grinding chamber (4) substantially constant.

12. Device according to any one of the preceding claims, **characterized in that** the device comprises a measurement device (19) for measuring the oxygen concentration in the gas discharged from the grinding chamber (4), wherein the measurement device (19) is connected to the second connection port (14).

13. Device according to any one of the preceding claims, **characterized in that** the first connection port (12) is arranged on the first end face (10) of the grinding container (2).

14. Method for high-energy and/or microgrinding of particles by means of free-flowing grinding media in a device according to any one of the claims 1 to 13, comprising the following steps:
(a) simultaneously supplying gas into and draining gas out of the grinding chamber (4) in such a way that an overpressure is applied to the grinding chamber (4) and a closed gas atmosphere is formed in the grinding chamber (4);
(b) introducing ground material into the grinding chamber (4) in the form of particles;
(c) propelling the rotor (6) to accelerate the grinding media in the grinding chamber (4) and to grind the particles;
wherein, during step (c), the continuous supply of gas into the grinding chamber (4) is controlled depending on the gas discharged from the grinding chamber (4) in such a way that the pressure in the grinding chamber (4) remains substantially constant.

15. Method according to claim 14, **characterized in that** the control of the continuous supply of gas into the grinding chamber (4) during step (c) is carried out by means of a safety device (18) which prevents a pressure prevailing in the grinding chamber (4) from exceeding a specified threshold value.

## Revendications

1. Dispositif de broyage énergique et/ou de pulvérisation de particules à l'aide de corps broyants en vrac dans une atmosphère gazeuse fermée comprenant,
un récipient de broyage (2) pour la réception des particules et des corps broyants avec un boîtier (3) fermé et un espace de broyage (4) situé à l'intérieur et un rotor (6) logé rotatif dans le récipient de broyage (2) autour d'un axe de rotation (5) horizontal pour l'accélération des corps broyants pendant une opération de broyage,
dans lequel le récipient de broyage (2) est réalisé cylindrique, s'étend le long de l'axe de rotation (5) et comprend en outre :
un premier côté frontal (10) et un deuxième côté frontal (11), qui sont agencés l'un en face de l'autre et s'étendent respectivement transversalement à l'axe de rotation (5) du rotor (6),
un premier raccord de liaison (12) pour l'amenée de gaz dans l'espace de broyage (4) et
un deuxième raccord de liaison (14) pour l'évacuation de gaz de l'espace de broyage (4),
dans lequel le deuxième raccord de liaison (14) présente un filtre (15), qui empêche une sortie de particules de l'espace de broyage (4) ou,
dans lequel un filtre (15) est agencé dans une conduite (16) reliée au deuxième raccord de liaison (14) et forme une barrière pour particules, qui sortent de l'espace de broyage (4), **caractérisé en ce que** le deuxième raccord de liaison (14) est agencé au niveau du deuxième côté frontal (11) et est positionné sur l'axe de rotation (5).

2. Dispositif selon la revendication 1, **caractérisé en ce que** le filtre est réalisé en tant que filtre en métal fritté (15).

3. Dispositif selon l'une quelconque des revendications précédentes, **caractérisé en ce que** le filtre (15) comprend un matériau filtrant avec des pores, qui présentent une taille de pore de 0,1 µm à 1 µm, de préférence de 0,3 µm à 0,7 µm, de manière particulièrement préférée d'environ 0,5 µm.

4. Dispositif selon l'une quelconque des revendications précédentes, **caractérisé en ce qu'**un collecteur (17) est agencé entre le deuxième raccord de liaison (14) et le filtre (15) pour la collecte de particules, qui sont sorties de l'espace de broyage (4).

5. Dispositif selon l'une quelconque des revendications précédentes, **caractérisé en ce que** le deuxième raccord de liaison (14) présente une ouverture d'évacuation de gaz (24) pour l'évacuation d'un courant d'évacuation de gaz de l'espace de broyage (4) et un élément de déviation (26) pour la déviation de particules s'écoulant en direction de l'ouverture d'évacuation de gaz (24), dans lequel l'élément de déviation (26) est positionné de sorte qu'il couvre l'ouverture d'évacuation de gaz (24) dans une direction le long de l'axe de rotation (5) du rotor (6).

6. Dispositif selon la revendication 5, **caractérisé en ce que** l'élément de déviation (26) est réalisé symétrique en rotation par rapport à l'axe de rotation (5) du rotor (6), se rétrécit en direction de l'ouverture d'évacuation de gaz (24) et est agencé concentriquement par rapport à l'ouverture d'évacuation de gaz (24) circulaire.

7. Dispositif selon la revendication 5, **caractérisé en ce que** l'élément de déviation est réalisé en tant que cône (26) avec une surface d'enveloppe (28), qui délimite unilatéralement un canal d'écoulement (29) pour le courant d'évacuation de gaz en direction de l'ouverture d'évacuation de gaz (24), dans lequel le canal d'écoulement (29) est réalisé de sorte qu'il force au moins un détournement du courant d'évacuation de gaz en direction de l'ouverture d'évacuation de gaz (24), de sorte que des particules soient séparées du courant d'évacuation de gaz.

8. Dispositif selon l'une quelconque des revendications précédentes, **caractérisé en ce que** le rotor (6) présente un arbre de rotor (7), qui est logé dans le récipient de broyage (2) d'un côté et s'étend le long de l'axe de rotation (5).

9. Dispositif selon les revendications 5 et 8, **caractérisé en ce que** l'arbre de rotor (7) présente une extrémité libre (8), qui est agencée espacée du deuxième raccord de liaison (14), dans lequel l'élément de déviation (26) est positionné entre l'extrémité libre (8) et l'ouverture d'évacuation de gaz (24) du deuxième raccord de liaison (14) dans le deuxième raccord de liaison (14).

10. Dispositif selon l'une quelconque des revendications précédentes, **caractérisé en ce que** l'espace de broyage (4) peut être sollicité avec une surpression.

11. Dispositif selon l'une quelconque des revendications précédentes, **caractérisé en ce que** le dispositif comprend un dispositif de sécurité (18), qui est réalisé pour empêcher qu'une pression régnant dans l'espace de broyage (4) dépasse une valeur seuil prédéterminée, et maintient ainsi la pression dans l'espace de broyage (4) sensiblement constante.

12. Dispositif selon l'une quelconque des revendications précédentes, **caractérisé en ce que** le dispositif présente un dispositif de mesure (19) pour la mesure de la concentration en oxygène dans le gaz évacué de l'espace de broyage (4), dans lequel le dispositif de mesure (19) est relié au deuxième raccord de liaison (14).

13. Dispositif selon l'une quelconque des revendications précédentes, **caractérisé en ce que** le premier raccord de liaison (12) est agencé au niveau du premier côté frontal (10) du récipient de broyage (2).

14. Procédé de broyage énergique et/ou de pulvérisation de particules à l'aide de corps broyants en vrac dans un dispositif selon l'une quelconque des revendications 1 à 13, comprenant les étapes suivantes :
(a) l'amenée et l'évacuation simultanées de gaz dans ou depuis l'espace de broyage (4), de sorte que l'espace de broyage (4) soit sollicité en surpression et une atmosphère gazeuse fermée soit formée dans l'espace de broyage (4) ;
(b) l'introduction de produit broyé sous la forme de particules dans l'espace de broyage (4) ;
(c) l'entraînement du rotor (6) pour l'accélération des corps broyants dans l'espace de broyage (4) et pour le broyage des particules ;
dans lequel pendant l'étape (c) l'amenée continue de gaz dans l'espace de broyage (4) est commandée en fonction du gaz évacué de l'espace de broyage (4) de sorte que la pression dans l'espace de broyage (4) reste sensiblement constante.

15. Procédé selon la revendication 14, **caractérisé en ce que** la commande de l'amenée continue de gaz dans l'espace de broyage (4) pendant l'étape (c) se fait à l'aide d'un dispositif de sécurité (18), qui empêche qu'une pression régnant dans l'espace de broyage (4) dépasse une valeur seuil prédéterminée.
